# EUROPEAN PATENT APPLICATION

(11) **EP 1 146 691 A1**
(43) Date of publication of application: **17.10.2001**
(21) Application number: 00830266.3
(22) Date of filing: 10.04.2000
(51) Int. Cl.: H04L 12/28, H04Q 7/30

(54) **Connecting radio cells to a radio network controller through copper twisted pairs by using the DMT technology**

(71) Applicant: Siemens Information and Communication Networks S.p.A., 20126 Milano (IT)
(72) Inventor: Morganti, Michele, 20136 Milano (IT); Rotolo, Salvatore, 20146 Milano (IT)
(74) Representative: Giustini, Delio

(57) **Abstract**

The present invention relates to a telecommunication network including:
- a fixed network for the routing of signals coming from voice and/or data;
- at least one station suitable for radio communication with user equipment equipped with transceivers;
- at least one controller of said station connected to said fixed network.

In particular, according to the invention the above mentioned station controller is connected to said station suitable for radio communication through copper twisted pairs of the unshielded type at whose ends DMT (Discrete Multitone) modems are connected.

In this way, the above mentioned copper twisted pairs work as "line feeders" of radio systems such as for instance: UMTS, BLUETOOTH ®, or more in general wireless local networks (WLAN). Thanks to the invention it is possible to use infrastructures implemented with unshielded copper twisted pairs, largely diffused on the territory, to feed with broad band signals radio cells of the typologies indicated above (fig.4).

## Description

### Field of the invention

The present invention relates to the telecommunication sector and more in particular to an architecture of broad band access network including copper twisted pairs modem connected in DMT technology (acronym of Discrete Multitone Modulation) and used as "line feeders" of radio access systems such as for instance: UMTS (Universal Mobile Transmission System), BLUETOOTH ®, or more in general WLAN (Wireless Local Area Network).

### Background Art

The basic idea of DMT technique is that to subdivide the available bandwidth into a high number of narrow band sub-channels. In these sub-channels some data are allocated getting the transmission capacity of each single sub-channel to be maximized. If any sub-channel does not enable to carry data, since it is affected by unfavorable signal/noise ratio, it is not considered. To enable this operation mode, the transmitting unit first transmits an equal number of bits per tone. The receiving unit processes the bits received from all the sub-channels and obtains an information on the best bit distribution among the different sub-channels to enable the best transmission speed; the above mentioned information is then transferred to the transmission unit, which adjusts the transmission as indicated. Through this, it is possible, for instance, not to consider the sub-channels at the lowest frequencies, which would be eliminated by the coupling transformers of the copper twisted pair, or those affected by a notch in the signal spectrum due to an interference by an AM radio station, or other sub-channels subject to other trouble causes.

More in particular, the DMT technique operates on digital data with methods that can be better described in the frequency domain, contrarily to what happens in the more common CAP (Carrierless Amplitude Modulation) and QAM (Quadrature Amplitude Modulation) techniques, better described in the time domain behaviour. As already said the DMT technique avails of a plurality of narrow band carriers all simultaneously employed to transmit relevant signals. The sub-channels are modulated in independent way and processed in parallel. The multicarrier modulation requires orthogonality among all the sub-carriers. To this purpose, it is profitably employed an FFT transform (Fast Fourier Transform), though other more sophisticated transforms have been recently proposed, for instance the Wavelet transform, which enable to have a spectral representation of each sub-channel to evaluate the transmission quality in order to determine the bit rate that can be individually assigned. The multicarrier techniques mentioned above, require a considerable "digital processing", which only in recent times has proved to be economically convenient thanks to the development of the integration techniques of custom circuits directly on silicon, such as for instance ASIC circuits, PGA circuits, standard-cells, etc.

The DMT ANSI T1.413 standard specifies 256 sub-carriers, each one associated to a sub-channel having 4 kHz band width. The signal of each sub-channel can be independently modulated with bit rates ranging from 0 to 15 bit/s/Hz. This enables up to 60 kbit/s per tone. At low frequencies, where the attenuation of copper wires is low (transformers excluded) and the signal to noise ratio SNR (Signal to Noise Ratio) is high, it is common to use a very dense constellation (in the plane representing the modulation vector), higher than the typical one of 10 bit/s/Hz. In contrary line conditions, modulation can be relaxed to accommodate a lower SNR, usually 4 bit/s/Hz or less, and therefore supply the necessary immunity to noise. Moreover, since the system measures the line integrity, it is possible to avoid particular frequency bands or compensate for cross-talk or for other interference typologies. An advantage of the DMT technique compared to the QAM/CAP one is given by the fact that to eliminate interference, it can rely on a higher stability of in the frequency domain, compared to burst type noises, which are almost unforeseeable in the time domain. Therefore, with the DMT technique it is possible to adjust the constellation density in a controlled way, on the basis of noise, in order to avoid power useless consumption in the disturbed sub-bands.

At this stage it is not necessary to deepen more the mathematical complexity of the DMT technique since the same, in a "separate consideration", is not part of the scope of the present invention; however, it is worth mentioning some typical applications of this technique. For instance, a more known commercial application is the realization of ADSL modems (Asymmetric Digital Subscriber Line) suitable to serve connections to copper twisted pairs to transmit 1,5 to 9 Mb/s downstream (towards the user) and 16 to 800 kb/s upstream (towards a central node), the enabled bit rate depending on the connection distance on the twisted pair. More in general, an ADSL circuit connects an ADSL modem to each termination of a copper twisted pair, enabling the realization of two information channels:
- A high speed downstream channel;
- A medium speed upstream channel;

In this type of plant, the transport of POTS channels (Plain Old Telephone Service), or ISDN (Integrated Service Digital Network) channels takes place through the insertion at the ends of twisted pairs of appropriate transformers, called splitters, similar to telephone fork terminals.

This implementation assures the functionality of POTS/ISDN channels even in the cases the ADSL functionality would fail.

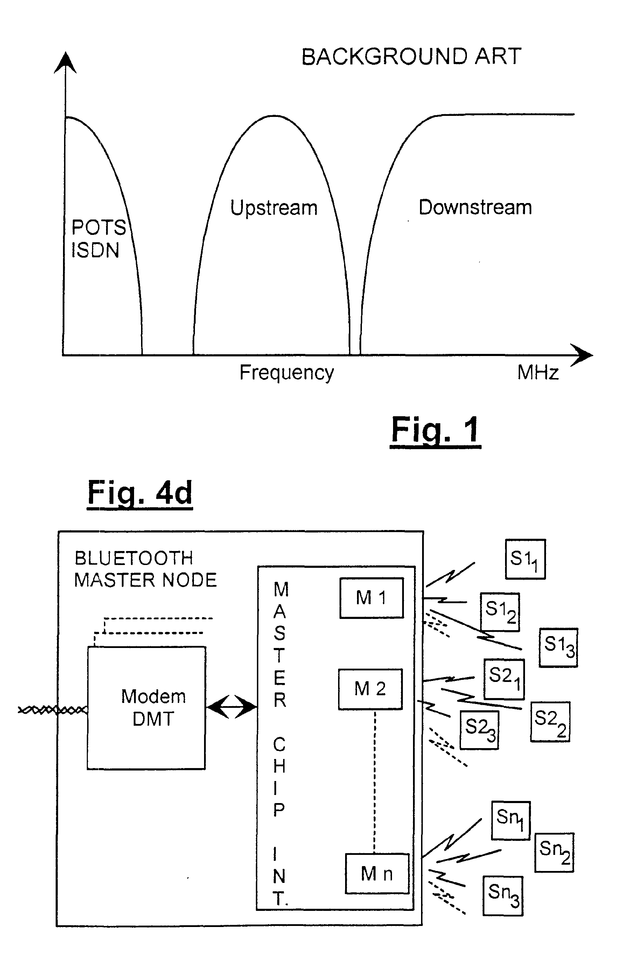

**Fig.1** shows a possible spectral allocation of the above mentioned channels generated by an ADSL modem. Making reference to the figure it can be highlighted the use of a FDD technique (Frequency Division Duplexing) for the realization of the bidirectional channel.

ADSL modems support data rates consistent with those of the more known North American and European hierarchies and can be adapted through selection among different speed and operation capacity ranges. The minimum configuration of the modem supports 1,5 to 2 Mb/s downstream and 16 kb/s for the upstream channel; other modems support speeds of 6,1 Mb/s downstream and 640 kb/s upstream. ADSL modems can accommodate ATM transport modules with variable transmission speed and the compensation for the overhead, like the Internet Protocol IP.

The carried bit rate depends, as already said, on a number of factors, including the length of copper twisted pairs, wire diameter, plant conditions, and cross talk causes. The line attenuation increases with the length of the twisted pair and the frequency increase, and decreases as the wire diameter increases. The following table shows for ADSL transmission, some examples of bit rate that can be reached downstream on copper twisted pair in different conditions:

| Bit rate Mb/s downstream | Standard of copper twisted pair | distance (km) | Wire Diameter |
|---|---|---|---|
| 1,5 o 2 | 24 AWG | 5,5 | 0,5 |
| 1,502 | 26 AWG | 4,6 | 0,4 |
| 6,1 | 24 AWG | 3,7 | 0,5 |
| 6,1 | 26 AWG | 2,7 | 0,4 |

ADSL modems have been successfully tested by more than 100 telephone companies and thousands of lines have been installed throughout the world. It is worth to mention that in access network applications different solutions have been proposed, generically called xDSL, however not necessarily all based on the DMT technique. The more important ones are listed below:
- ADSL. As already said up to a distance of approx. 5-6 km of AWG 26 twisted pairs.
- ADSL Lite (simplified). The bit rate is limited to 1,5-2 Mb/s or less in downstream direction. No request for the use of a POTS splitter at the CPE location (Customer Premises Equipment).
- RADSL (Rate Adaptive Digital Subscriber Line). Enables the speed variation on the basis of the line quality. Performances are similar to the previous ones for normal ADSL.
- HDSL (High-speed Digital Subscriber Line). Symmetric full-duplex connection of T1 or E1 type in each direction on two or three twisted pairs with wires AWG 26. Distance 3-4 km approx.
- SDSL (Single-line Digital Subscriber Line). Symmetric full-duplex connection for T1 or E1 in each direction. Distance about 2-3 km on AWG 26 twisted pairs.
- VDSL (Very High bit rate Digital Subscriber Line). For asymmetric connection with downlink bit rate up to approximately 50 Mb/s and uplink up to approximately 2 Mb/s, on short distances using the twisted pair.

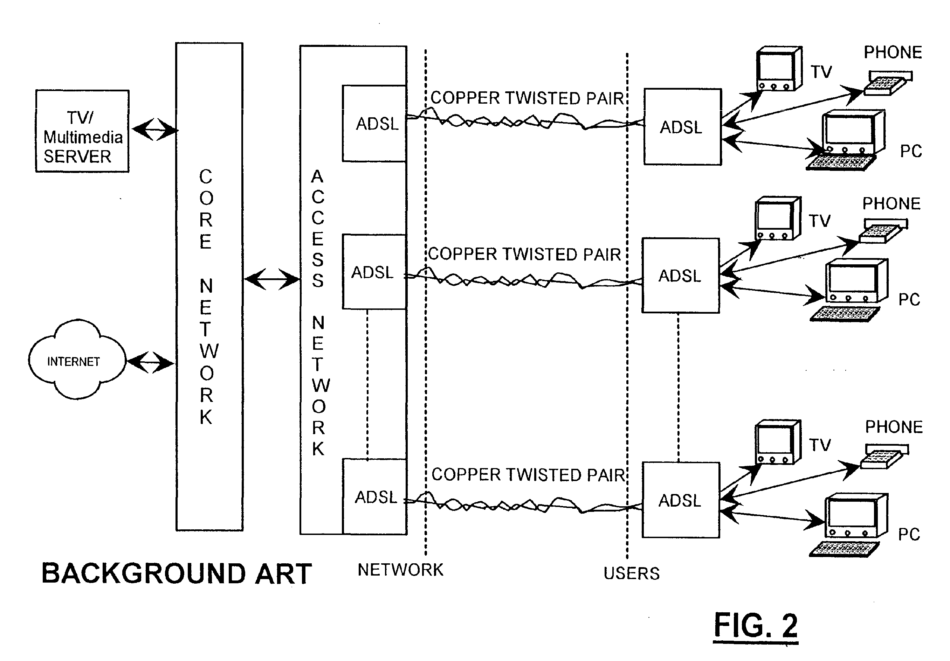

**Figure 2** shows a scenario representing the introduction of ADSL modems to the service of home and office users; altogether defined USERS. As it can be noticed in the figure, a block representative of a terrestrial Core Network is interfaced, on one side, with Internet nodes and with Servers for TV and/or multimedia applications, and on the opposite side, with an access network giving ADSL connection functions on copper twisted pair. In fact, from the access network, twisted pairs are branched and reach the user through relevant ADSL modems. For representation convenience, fig. 2 does not highlight the presence of POTS SPLITTER, previously described.

As already said, the xDSL technology perfectly matches the copper twisted pair; however it must be pointed out that telecommunication networks have advanced in these last years, expanding the interconnection possibility also to mobile users. Of course, in the mobile systems the copper twisted pair lacks, it would appear therefore that the xDSL technology has not, in principle, application possibility in this sector.

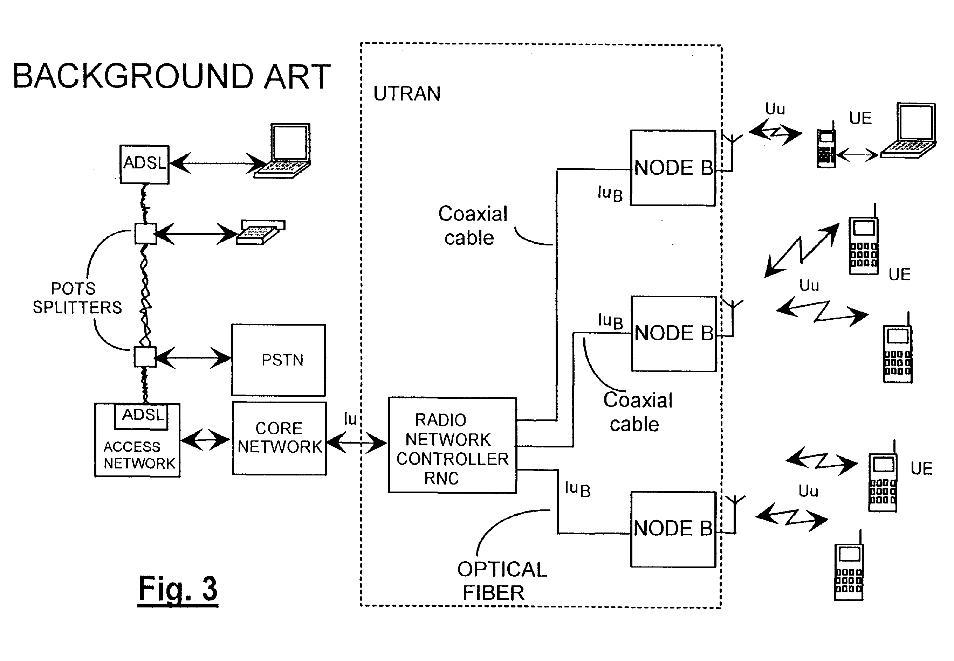

**Fig. 3** shows a typical scenario of a third generation mobile system, UMTS type (Universal Mobile Transmission System). The UMTS system includes subsystems called UTRAN (UMTS Transmission Radio Access Network), cable connected, and a terrestrial Core Network CN and, radio connected, to a plurality of "User Equipment" UE transceivers: typically portable phones or mobile stations (Communicator Facilities) consisting of the combination of a laptop computer, a modem and a portable phone for data transmission. The on air interface is denoted in standard proposals with U_{U}, while the connection between the UTRAN block and the node of the core network CN is denoted with I_{U}. A UTRAN subsystem includes in its turn a RNC block (Radio Network Controller) connected to more blocks called Node B, corresponding to a same number of Base Transceiver Stations. The connections, typically foreseen on coaxial cable or optic fiber, between the RNC block and the different Node B blocks are denoted with I_{UB}. For completeness sake, on the left side of the figure a user fixed connection of the traditional type (PSTN) is shown, with the addition of ADSL modem (abutted network side on a dedicated ACCESS NETWORK) for the offering of broad band services. The use, optional, of POTS SPLITTER has mainly the purpose of enabling a better separation of the band dedicated to the old telephone signal (POTS) from that employed by ADSL modems.

The following Regulatory documents:
- 3GPP TS 25.411 version 3.1.0 Release 1999, UTRAN lub Interface Layer 1.
- 3GPP TS 25.411, V.2.0.0 (5/99), UTRAN lu Interface Layer 1.
Issued by the Regulatory Organization for the definition of a third generation mobile system UMTS, describe the different types of interface at physical level (OSI Level 1) allowed for the implementation of the lub connection of fig. 3. The main Level 1 functions of this connection can be identified as follows:
- interface to the physical means,
- cell delineation,
- extraction capacity of the line clock,
- extraction and generation of alarms relevant to physical level,
- check of the frame sequence,
- check of the transmission quality.
The reference diagram of the physical level interface (OSI Level 1) is contained in Recommendations ITU-T 1.432.1.
Level 1 (physical) is in its turn, broken out in the following sub levels:
- Sublevel Physical Media Dependent (PMD);
- Sulblevel Transmission Convergence (TC) (defined in Recommendation ITU-T 1.432.1).
According to the Standards, the PMD sublevel shall be in compliance with at least one of the following standards:
- Interface ETSI STM-4 (622 Mb/s) in accordance with 1.432.2, with optical interface S-1.1 in accordance with G.957.
- Interface SONET STS-12c (622 Mb/s) in accordance with ANSI, T1.105-1995 with multimode optic fiber.
- Interface SONET STS-3c (155 Mb/s) in accordance with ANSI, T1.105-1995 with multimode optic fiber.
- Interface ETSI STM-1 (155 Mb/s) in accordance with 1.432.2 with electrical interface (CMI) in accordance with Recommendation G.703.
- Interface ETSI STM-1 (155 Mb/s) in accordance with 1.432.2 with optical interface S-1.1 in accordance with Recommendation G.957.
- Interface ITU STS-1 (51 Mb/s) in accordance with ANSI, T1.105-1995 with electrical interface.
- Interface ITU STM-0 (51 Mb/s) in accordance with ETSI/TTC with electrical interface.
- Interface ITU STM-0 (51 Mb/s) in accordance with ETSI/TTC with optical interface S-1.1 in accordance with Recommendation G.957.
- Interface J2, 6.3 Mb/s in accordance with the Japanese standard JT-G.703 and JT-G.704 (75 Ohm).
- Interface E2, 8 Mb/s in accordance with ETSI/ITU G.703 and G.704 (75 Ohm).
- Interface E3, 34 Mb/s in accordance with ETSI/ITU G.751 (75 Ohm).
- Interface T3, 45 Mb/s in accordance with ANSI/ITU G.703 and G.704 (75 Ohm).
- Balanced symmetric interface E1, 2Mb/s 120 Ohm in accordance with ETS 300 420, ITU-T G.704 and TBR 013 (G.703), and AF-PHY-0064.000.
- Interface E1, 2Mb/s in accordance with ETSI/ITU G.703 and G.704 (75 Ohm), and AF-PHY-0064.000.
- Interface J1, 1.5 Mb/s in accordance with JT-431- (100 Ohm).
- Interface J1, 1.5 Mb/s in accordance with JT-G.703 and JT-G.704 (110 Ohm).
- Interface T1, 1.5 Mb/s in accordance with AF-PHY-0016.000 and ANSI/ITU G.703 and G.704 (100 Ohm).

The binding type between Node RNC and Node B requiring the minimum transmission capacity is of the 2 Mb/s type. Parameters and characteristics of this type of interface are defined in Recommendations ITU-T G.703 and G.704.

In all the cases specified, services supplied at a level higher than physical level 1 shall not depend on the technology employed.

### Object of the invention

The present invention has the object to expand the use of the DMT technique to cover additional application possibilities in fields in which their use has not been proposed up to now.

A first expansion possibility of this technique is seen, according to the present invention, in the cellular telecommunication sector, preferably availing of, but not limited to, the UMTS technology and in general of the technology in use in the second generation cellular mobile networks (such as for instance those in GSM, DECT technology, etc.) and third generation ones (W-CDMA, CDMA-2000, IMT 2000, etc.).

A second expansion possibility is seen in the world of low power radio connections and on very short distance, typical of the so-called Bluetooth ® technology, which shall be widely described in an application example.

A third expansion possibility is seen in the sector of wireless broad band local networks, the so called WLAN supporting radio services, such as for instance the HOME-RF, IEEE 802.11 standards or the LAN implementation of the DECT (Digital Enhanced Cordless Telecommunications).

### Summary of the invention

To attain said objects, scope of the present invention is a telecommunication network, as indicated in the claims.

The network architecture proposed by the invention actually extends the DMT technique (Discrete Multitone) to cover the following application fields, and possible other fields related thereon:
- connections between base stations of cellular telecommunication and relevant control nodes;
- connections between base stations of a local network WLAN and relevant control nodes;
- connections among transceiver master devices in Bluetooth ® technology, or other transmission technology similar to the same, and relevant control nodes.

### Advantages of the invention

Profitably, the above mentioned connections can be implemented availing of the already existing infrastructures, in particular copper twisted pairs, with evident cost saving and expeditiousness of supply of the associated innovative services.

In fact, the increasing diffusion of such networks (which in many countries are approaching penetration levels compared to population in the range of 100%), accompanied also by the increase in the number of operators and of the band that can be assigned to each user, necessarily involves a gradual increase in the number of radio cells (where "cell" means the area covered by each master element) and therefore also a gradual reduction of their area (micro, nano and pico-cells).

Since the master element of each cell shall be connected to the relevant network node through a broad band fixed connection (typically through coaxial or optic fiber cable) this would inevitably result in considerable costs, and above all, very long deployment times.

Main advantage of the present invention is therefore that of considerably reducing costs and times for the installation of new master elements enabling to reemploy for their binding the copper capillary cabling of the core telephone network without affecting the existing services, seen the characteristics of the DMT technology.

In addition, in applications concerning the UMTS system in figure 3, DMT connections on copper twisted pair are able to easily match the asymmetric character requirements of UMTS connections with the easy implementation of the DMT technology, with methods not differing from those used, for instance, for the realization of ADSL modems.

In applications concerning the Bluetooth ® environment there is the advantage to perform picocells corresponding to the different flats of a building. Being residential picocells adequate to different communication forms, such as for instance the remote control of household appliances by a master device, radio connected to the mentioned appliances, and DMT modem and copper twisted pair connected to the telephone network. In this case, DMT modems enable to implement a set of symmetric star connections towards master radio stations.

Another embodiment of the previous Bluetooth ® application enables to connect a whole set of master devices to a DMT modem, in order to optimize the band available on copper twisted pair and the number of DMT modems used.

Another embodiment, common to all the application sectors of the DMT technique mentioned above, foresees the utilization of DMT repeaters on the copper twisted pairs to remedy to the loss of transmission capacity, in terms of bit rate, increasing with the distance covered by the signal on the copper twisted pair.

An additional advantage is the possibility to share the copper twisted pair with the already existing services both through the use of splitters and in splitterless mode.

Other embodiments are described in the text and form the object of the ensuing claims.

### Brief description of figures

The present invention, together with further objects and advantages thereof, may be understood with reference to the following detailed description, taken in conjunction with the accompanying drawings, in which:
- **fig. 1** shows a spectral representation of signals occupying the different channels of a modem based on DMT technique;
- **fig. 2** shows a ground network architecture employing ADSL connections according to the known art;
- **fig. 3** shows a mobile network architecture according to the known art;
- **fig. 4** shows a network architecture according to the present invention;
- **fig. 4a** shows a MODIFIED RNC block of fig.4;
- **fig. 4b** shows a MODIFIED NODE B block of fig.4;
- **fig. 4c** shows a BLUETOOTH MASTER NODE block of fig.4;
- **Fig. 4d** shows a BLUETOOTH MASTER NODE block of fig.4 realized according to another embodiment of the invention.

### Detailed description of some embodiments of the invention

**Figures 1, 2, and 3** have already been described in the presentation of the background art.

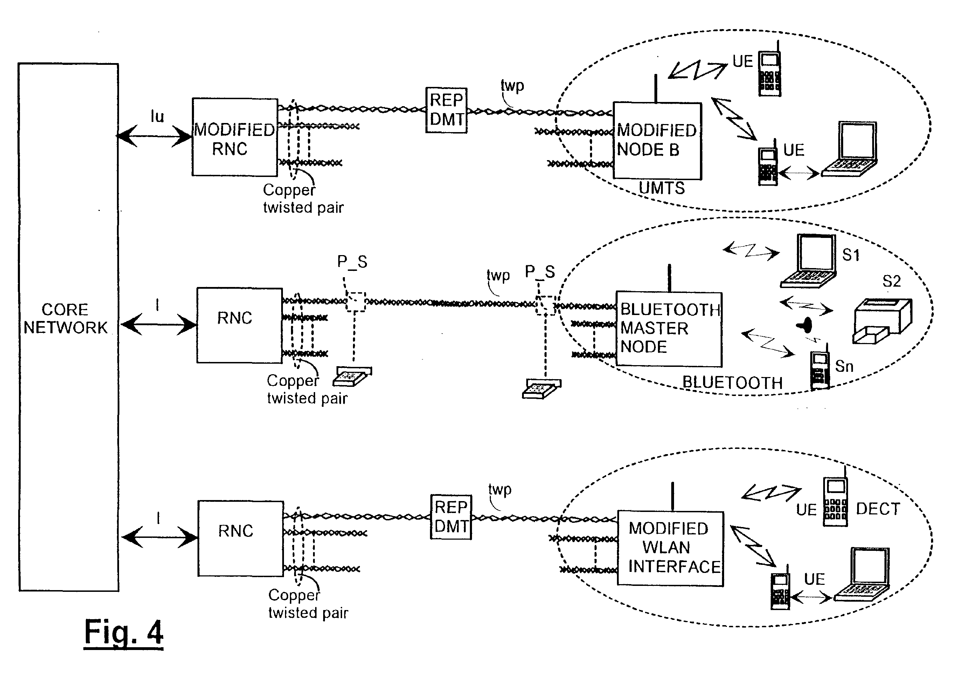

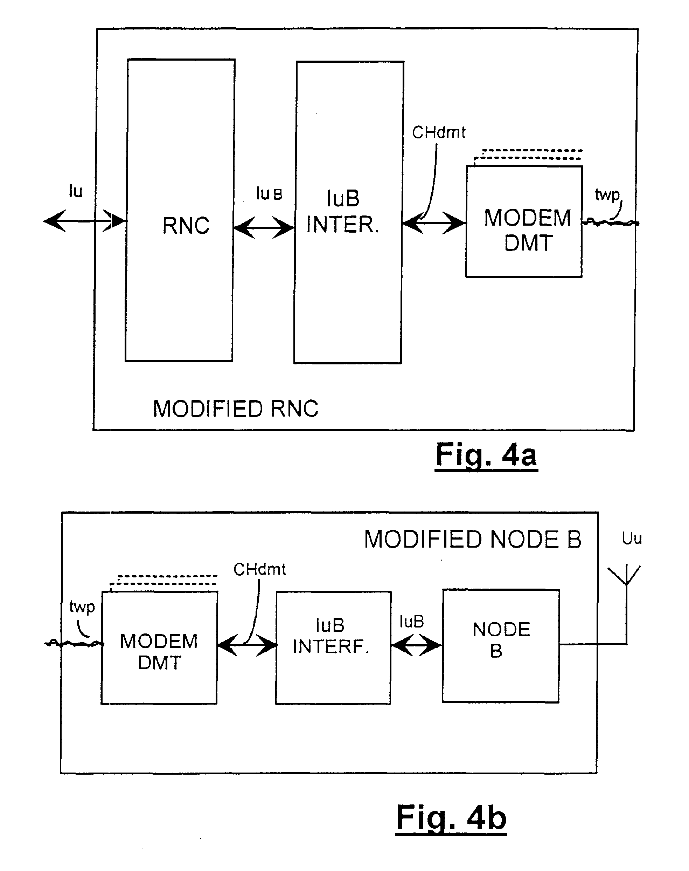

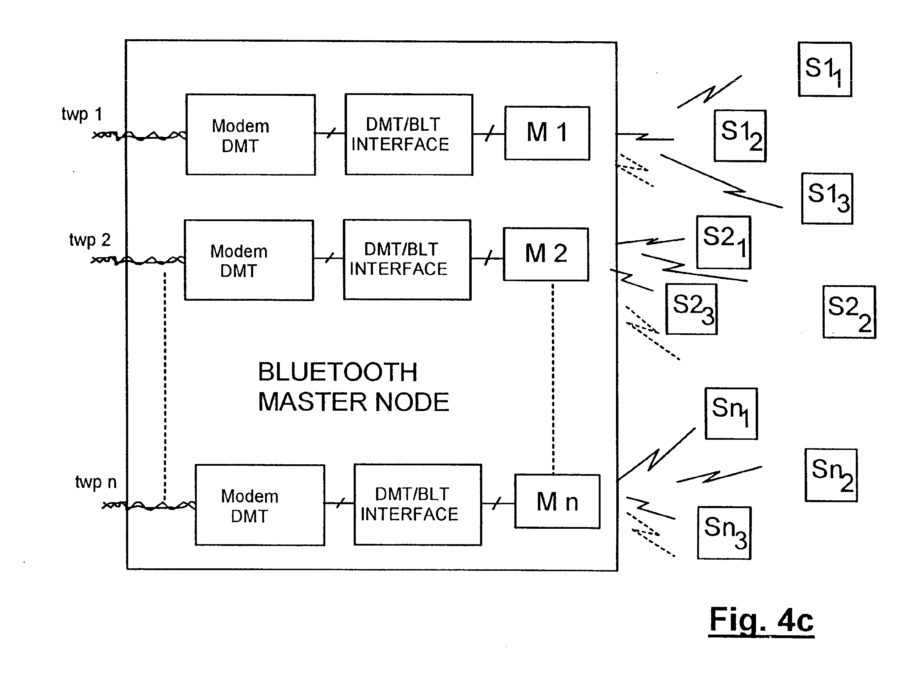

**Fig. 4** shows a telecommunication network, represented through the following functional blocks: CORE NETWORK, MODIFIED RNC, MODIFIED NODE B, two RNC blocks, BLUETOOTH MASTER NODE, MODIFIED WLAN INTERFACE, three REP DMT blocks and P_S blocks. The CORE NETWORK block is respectively connected to the MODIFIED RNC block through a bi-directional lu connection in UMTS applications, and to a first and a second RNC block through bi-directional connections in Bluetooth and WLAN applications. For sake of brevity, we have not indicated further connections to the CORE NETWORK block, which however have been highlighted in fig.3. The MODIFIED RNC block is connected to the MODIFIED NODE B block through an unshielded copper twisted pair twp crossing a repeater block of REP DMT signal placed on the connection.

We point out that the UMTS field is mentioned only to exemplify a third generation cellular system being the invention completely applicable also combined with any second generation portable phone system such as for instance GSM, DECT, etc. systems or other third generation systems such as W-CDMA, CDMA-2000, IMT 2000 as well as more in general WLAN systems.

Likewise, a first RNC block is connected to the block BLUETOOTH MASTER NODE through a second unshielded copper twisted pair twp crossing an additional signal repetition block REP DMT placed on the connection and possibly, P_S blocks. P_S blocks are intended to represent POTS SPLITTER and are shown with a dotted line to highlight the sharing possibility of the copper twisted pair (when the network implements the teachings of the invention) with the already existing services, either through the use of splitters or in splitterless applications.

Finally, an additional RNC block is connected to the MODIFIED WLAN INTERFACE block through an unshielded copper twisted pair twp crossing another repeater block of REP DMT signal placed on the connection. It is pointed out that the term RNC does not necessarily involve the reference to the same term used in UMTS environment.

The MODIFIED NODE B block is radio connected to "User Equipment" UE similar to those indicated in fig.3; the radio environment of the first dotted block on the right top of the figure is limited to a UMTS environment. The BLUETOOTH MASTER NODE block is radio connected to a set of devices S1, S2, Sn starting from laptop computers, printers, portable phones, etc.. The radio environment of the central block dotted in the figure is limited to a BLUETOOTH environment.

The MODIFIED WLAN INTERFACE block is radio connected to "User Equipment" UE similar to those indicated for the UMTS; the radio environment is referred to WLAN environment or other similar standards (HOME-RF, IEEE 802.11, ETC.).

In the operation, the CORE NETWORK block identifies the known part of a terrestrial core network. The MODIFIED RNC block is obtained from the block of fig.3 under the same name, with the modifications necessary to support the connection to a DMT modem, which shall be described making reference to fig. 4a. The same considerations apply to the MODIFIED NODE B block that shall be described making reference to fig. 4b. The couple of RNC and MODIFIED WLAN INTERFACE blocks have functional requirements that can be easily related to the previous couple of blocks. As far as the Bluetooth environment is concerned, the BLUETOOTH MASTER NODE block shall be described making reference to figures 4c, 4d, on the contrary, as for the RNC block it must be said that it too includes a DMT modem, therefore it shall necessarily include an interface between the DMT channels and the typology of flows foreseen on the I connection. Also in this case, once the requirements of the generic interface I are identified, the block can be immediately implemented by the skilled in the art who knows the DMT modem and the radio system. For simplicity reasons, only one copper twisted pair twp per connection has been shown in fig.4, while in practice there will be as many twisted pairs (and possible repeater blocks REP DMT) as are the couples of DMT modems necessary to convey the foreseen traffic. In the case of very long connections, more REP DMT repeater blocks can be foreseen on the single connection.

Making reference to fig. 4a we see that the MODIFIED RNC block includes the RNC block of fig. 3, a lub INTERFACE block and some DMT MODEM modems. Similarly to what said for fig. 3, the RNC block is involved in the connection lu, on one side, and in the lub connection on the opposite side. However, contrarily to fig. 3, the lub connection does not directly reach a NODE B block but the lub INTERFACE block. This last block is in its turn connected to the modems MODEM DMT through a bi-directional connection denoted with CHdmt.

In the operation, as far as the lub INTERFACE block is concerned, it is pointed out that this interface block is requested to perform an adjustment of the format of bit flows between the two sides of the interface and possible re-synchronization, in order to adequately feed the DMT modems.

The configuration foreseeing the use of P_S is indicated in fig. 4 in the sole connection relevant to the BLUETOOTH environment but, of course, it can be made also in the other connection types.

Making reference to fig. 4b we see that the MODIFIED NODE B block includes the NODE B block of fig. 3, a lub INTERFACE block and some MODEM DMT modems. Similarly to what said for fig. 3, the NODE B block is involved in the lub connection, on one side, and by the radio connection of the on air interface Uu on the opposite side. However, contrarily to fig. 3, the lub connection does not directly reach the RNC block, but the lub INTERFACE block. This last block is connected to the MODEM DMT block through a CHdmt connection. The same considerations made for the MODIFIED RNC block now apply.

The implementation of the invention concerning the WLAN is considered as similar to the case of the UMTS, however it is worth making some brief considerations on the DECT system as an example of one of the networks that can be labeled under the WLAN acronym.

The DECT (Digital Enhanced Cordless Telecommunications) is a digital and flexible radio access standard for residential applications either in private or public environments. It enables both the voice and the multimedia traffic (broad band). Data applications have a considerable market interest, mainly in the light of Internet evolution. The DECT protocol assures up to the present date, speed rated up to 552 kbit/s. New modulation schemes will enable in short to reach data rates up to 2 Mbit/s. The access technique is the TDMA one (Time Division Multiple Access), offering high capacity and enabling a 'coverage' up to 100.000 users per km² in office type environment. The voice modulation technique is the ADPCM (Adaptive Differential Pulse Code Modulation), capable to assure very high quality, comparable with that obtained from fixed network systems. The DCS/DCA (Dynamic Channel Selection / Allocation) access technique is a unique prerogative of DECT and assures an effective reutilization of radio carriers. The architecture foresees a line B Interface that binds the Controller of RNC Node to the Base Station. The physical means such an interface avails of in limited band applications is the copper twisted pair. Other features of the DECT standard concern the 'encryption' of signals and the optimization of the radio transmission to save the battery power. The interface adopted for the basic access ISDN (BRA U access) has the following characteristics:

| Transmission speed (Bit Rate) | | 144 kbit/s |
|---|---|---|
| Line code | | 2B1Q |
| Number and speed of traffic channels (channels B) for each single copper twisted pair | | 2 x 64 kbit/s |
| Number and speed of signalling channels (channel D) for each single copper twisted pair | | 1 x 16 kbit/s |
| Max. attenuation | | 36 dB at 40 kHz |
| Max. error rate (BER max) | | 10⁻⁷ |

The DECT standard is addressed to a wide range of applications: from the single domestic cell to "Local Loop" applications, to applications directed on a wide geographic extension to thousands of users in different areas. Some application examples follow:
- Home DECT . The single DECT cell at home assures the best coverage and the intercommunication among all the appliances equipped with this interface.
- DECT at Office. A multi-cell PBX system forms a homogeneous communication environment and for voice and data communication among users even in high density areas.
- DECT in 'Wireless Local Loop (WLL). DECT offers a radio access technology quickly available in public environment to supply data and voice services to the users surpassing the technical and economic limits imposed by a cabling.
It is now described the application of the invention in Bluetooth environment, but before describing figures 4c, 4d it is worth giving a brief introduction to this new technology, which prefigures as a specification open to wireless voice and data communication opportunities. The technology is based on microchips for the formation of a short distance and low cost radio link, facilitating protected ad hoc connections for use in communication environments with stationary and moving characteristics. The Bluetooth technology enables to replace a quantity of proprietary cables connecting a device to another one with the above mentioned radio link on a short distance. For instance, two Bluetooth chips, one in a portable phone and the other one in a laptop computer can replace the encumbering connection cable. Printers, fax sets, desktop computers, joysticks, keyboards, and virtually other digital equipment can be part of a Bluetooth system. Another application is to obtain a low power transceiver between a microphone/earphone and a portable phone placed far from the head to avoid damages to the user deriving from emissions at microwaves having non-negligible power. But in addition to replace the cables, the Bluetooth radio technology supplies a universal link among the existing data networks, a peripheral interface, and a mechanism to form a small ad hoc grouping of interconnected devices distant from the infrastructures of the core network. Designed to operate in disturbed environment, the radio Bluetooth operates according to a frequency-hopping scheme to fight interference and selective fading, thus making the link more stout. The use of a Forward Error Correction (FEC) limits the impact of the random noise on the longer distance of links.

The Bluetooth technique operates in a non regulated band, allocated at approximately 2,4 GHz. An FSK binary Gaussian shaped modulation, having BT product = 0,5, is used to minimize the complexity of the transceiver. The maximum frequency deviation is between 140 and 175 kHz. The gross bit rate is about 1 Mb/s. The channel is applied in time slots having 625 µs duration. It is used a full-duplex receipt transmission of the TDD type (Time Division Duplexing). On the channel, the information is exchanged in bit packets; each packet is transmitted with a different frequency hopping. A packet generally covers one slot, but it can be extended to cover up to five slots. The Bluetooth ® protocol employs a combination of packet and circuit switching, where some time slots can be destined to synchronous packets.

A Bluetooth ® connection can support an asynchronous data channel, up to three synchronous and simultaneous voice channels, or a channel simultaneously supporting asynchronous and synchronous voice data. Each voice channel supports 64 kbit/s synchronous voice in each direction. The asynchronous channel can support up to maximum 721 asymmetric kbit/s: (and yet up to 57,6 kbit/s in return direction), or 432,6 symmetric kbit/s.

The block diagram of a Bluetooth ® system can be represented through a cascade of three blocks, out of which:
- one radio unit;
- one unit for link control;
- one support unit for the link management, with interface and I/O interface functions towards a host terminal.

The radio link is of the point-to-point or point-multipoint type. In the first case only two Bluetooth ® units are involved, while in the second case the channel is shared among different units. Two or more units sharing the same channel form a network called piconetwork, or piconet. One Bluetooth ® unit acts as master of the piconet, while the other units acting as slave(s). Up to seven slaves can be active in a piconet. All the Bluetooth units participating in a piconet are synchronized to the clock and to the hopping sequence of the Master unit. The rated hop rate is 1.600 Hops/s. The Bluetooth technology has actually become a standard supplied with free license to more than 1.300 producers. Its fortune derives from the fact to meet the more usual and modern requirement of a user. In fact the strategy the Bluetooth architecture is inspired, is that to define profiles for the standardization guiding in the realization of operation models available to the user. The models describe a given number of scenarios where radio transmission is performed. The following four profiles are foreseen:
- Generic Access Profile, GAP. Enables interoperability among Bluetooth units irrespective of the manufacturer and application type.
- Service Discovery Application Profile, SDAP. Discovers known, specific and general order services.
- Serial Port Profile. Defines the set-up modes of serial virtual ports on two devices and the connections to Bluetooth units. A serial port RS232 with bit rate up to 128 kbit/s is emulated.
- Generic Object Exchange Profile, GOEP. Defines the set of protocols and procedures to be used for applications handling and exchanging software objects.

These profiles, as already said, enable the definition of models. One or more corresponding profiles are foreseen for each model, which define the protocol levels and functions to be used. Some models are briefly described here after.
- File Transfer. The model offers the possibility to transfer files between different devices and support files, complete folders, directories and the format of transport flows.
- Internet Bridge. The model describes how a portable phone or a cordless modem gives the PC the capability to dial the number for the routing of the call without the need of the physical connection to the PC.
- LAN Access. The model is almost similar to the previous one, differing in that it does not employ the protocol for the telephone dial-up.
- Synchronization. The model enables the automatic synchronization between a desktop PC, a portable PC, a mobile phone and a portable computer.
Additional application schemes are under definition.

Making reference to fig. 4c, it can be noticed that the block BLUETOOTH MASTER NODE includes n blocks Modem DMT, connected to relevant interface blocks DMT/IBLT INTERFACE, also individually connected to Bluetooth master devices, denoted M1, M2, ..., Mn. Outside the BLUETOOTH MASTER NODE block it can be noticed groups of Slave devices denoted with S1₁, S1₂, S1₃; S2₁, S2₂, S2₃; and Sn₁, Sn₂, Sn₃; low power radio connected to the relevant Masters, denoted by the same ordinal number. Slave elements of each set, simultaneously active, can be up to a number equal to seven. Each one of the n twisted pairs twp coming out from the BLUETOOTH MASTER NODE block shall reach the RNC block of fig. 4, where it shall find a relevant modem DMT.

In the operation, each DMT/BLT INTERFACE block gives adaptation functionality among DMT channels and Bluetooth channels, and vice versa, as far as synchronism is concerned, the transmission format, and the bit rate. This implementation is possible for the sector technician who has knowledge of all the information in this respect.

The scenario shown in fig.4c well fits to the case in which master devices are installed in the flats of a building. The preferred condition corresponds also to the most common one, that is, to the case in which as many Masters are foreseen as are the twisted pairs (generally one) and entering each flat. For each master the corresponding slave devices can be included in intelligent household appliances, which can be thus remote controlled. Also today there are possibilities for remote control through the use of the phone, but the possibilities offered are limited by the scarce transmission resources offered by the copper twisted pair used in a traditional manner. Combining the DMT modem to Bluetooth masters enables to considerably expand the communication possibilities, going well beyond the pure and simple remote control. A synergy comes out between the drastic increase of the band availability on the copper twisted pair and the different protocol functions performed through profiles and models of the Bluetooth piconet. Thanks to this synergy the great communication possibilities between master devices and slave can go out from the extremely limited geographic boundary of the Bluetooth world, configuring a flat as a picocell fit with functions jointly supplied by the Bluetooth technology and by the modern telecommunication network. This result would not have been reached considering the two Bluetooth and DMT functionality, in an independent way.

Figure 4d differs from the previous one due to the fact that a single Modem DMT is connected to more Bluetooth master devices through a single interface block, indicated in the figure with MASTER CHIP INTERFACE. The condition shown is the minimum one, because according to the band requirements of the master devices, additional DMT Modems can be added and connected to the common MASTER CHIP INTERFACE. The scenario here represented, shows for instance a large office having a great number of computers and relevant peripherals, fax sets, telephone sets, etc. In this case it can be convenient to group master devices inside a common interface distributing the band available on the connection DMT among the different Bluetooth masters. This function is performed by the MASTER CHIP INT. interface block which performs a multiplexing of flows transmitted by master devices M1, M2, ..., Mn towards the DMT Modem block. Of course, the MASTER CHIP INT. interface performs the dual demultiplexing function. Said block performs also the possible format conversion between transmitted and received flows.
Therefore, while some particular embodiments of the present invention have been shown and described, it should be understood that the present invention is not limited thereto since other embodiments may be made by those skilled in the art without departing from the scope thereof. It is thus contemplated that the present invention encompasses any and all such embodiments covered by the following claims.

## Claims

1. Telecommunication network including:
• a fixed network (CORE NETWORK) for the routing of the signals coming from voice and/or data;
• at least one station (MODIFIED NODE B, BLUETOOTH MASTER NODE, MODIFIED WLAN INTERFACE) suitable for radio communication with user equipment (UE; S₁, S₂, Sₙ) equipped with transceivers;
• at least one controller of said station (MODIFIED RNC, RNC) connected to said fixed network (CORE NETWORK);
**characterized in that** the above mentioned station controller is connected to said station suitable for radio communication through at least one copper twisted pair (twp) at whose ends (MODEM DMT) modems are connected, exchanging the signals obtained using the following means, typical of the technique know as "Discrete Multitone Modulation", called also DMT:
a) means for the generation of a plurality of sub-carriers, each one associated to a narrow band sub-channel, preferably 4 kHz;
b) means for the allocation of said plurality of sub-carriers in different bands in relation to the transmission direction;
c) modulation means of the sub-carriers through a relevant signal obtained from a flow of bits of the signal to be transmitted;
d) means for the assessment of the transmission quality of each sub-channel;
e) means acting on said modulation means to vary the quantity of information to be transmitted on each single sub-channel on the basis of the assessed quality;
f) means for the demodulation of modulated sub-carriers;
g) means for the reconstruction of the original flow through recombination of demodulated signals.

2. Telecommunication network according to claim 1, **characterized in that** said copper twisted pair (twp) is of the unshielded type.

3. Telecommunication network according to one of the previous claims,
**characterized in that** said at least one station suitable to communicate via radio (MODIFIED NODE B) is configured in such a way that a cellular telephone connection can be implemented (UMTS, GSM, W-CDMA, IMT 2000, etc.).

4. Telecommunication network according to claim 1 or 2, **characterized in that** said at least one station (MODIFIED WLAN INTERFACE) suitable for radio communication is configured is such a way that a connection to a local network (WLAN) is possible.

5. Telecommunication network according to claim 1 or 2, **characterized in that** the transmission devices (M₁, M₂, Mₙ) included in said at least one station (BLUETOOTH MASTER NODE) suitable for radio communication and in said user equipment fit with transceiver (S1₁, S1₂, S1₃; S2₁, S2₂, S2₃; Sn₁, Sn₂, Sn₃) are devices implemented through one or more single chips integrated circuits.

6. Telecommunication network according to claim 1 or 2, **characterized in that** the above mentioned station controller (MODIFIED RNC) includes also an interface unit (lu_{B} INTER) connected to the above mentioned modem (MODEM DMT) to convert the format of flows transmitted by said fixed network (CORE NETWORK) towards the modem and to perform the format conversion in the opposite direction.

7. Telecommunication network according to claim 3, **characterized in that** the above mentioned station suitable for radio communication (MODIFIED NODE B) includes also an interface unit (lu_{B} INTER) connected to the above mentioned modem (MODEM DMT) to convert the format of flows transmitted by said user equipment (UE) towards the modem and perform the format conversion in the opposite direction.

8. Telecommunication network according to claim 5, **characterized in that** said transmission devices included in said at least one station (BLUETOOTH MASTER NODE) suitable for radio communication are of the master type (M₁, M₂, Mₙ) and said user equipment equipped with transceiver (S1₁, S1₂, S1₃; S2₁, S2₂, S2₃; Sn₁, Sn₂, Sn₃) are one or more slave devices that can be inserted in peripheral equipment controlled by a relevant master device.

9. Telecommunication network according to claim 8, **characterized in that** each master device (M₁, M₂, Mₙ) is connected to a relevant modem (MODEM DMT) through an interface (DMT/BLT INTERFACE) to convert the format of flows transmitted by said master devices towards the modem and to perform the format conversion in the opposite direction.

10. Telecommunication network according to claim 8, **characterized in that** each master device (M₁, M₂, Mₙ) is connected to a sole modem (MODEM DMT) through an interface (MASTER CHIP INT.) suitable for multiplexing the flows transmitted by said master devices towards the modem, performing the format conversion, and also suitable for demultiplexing a flow coming from the modem towards said master devices, performing the format conversion.

11. Telecommunication network according to one of the previous claims,
**characterized in that** along the connection made through said copper twisted pair (twp) one or more units (REP DMT) are inserted for the repetition of signals obtained through the means listed above making reference to paragraphs a) to g).

12. Telecommunication network according to one of the previous claims,
**characterized in that** along the connection made through said copper twisted pair (twp) some POTS SPLITTER (P_S) units are inserted to enable a better separation of the band assigned to the traditional telephone service (POTS) from that used by modems.
